# EUROPEAN PATENT SPECIFICATION

(11) **EP 0 453 864 B1**
(45) Date of publication and mention of the grant of the patent: **04.09.1996**
(21) Application number: 91105587.9
(22) Date of filing: 09.04.1991
(51) Int. Cl.: G03B 17/30

(54) **A photographic film cassette**
Kassette für einen photographischen Film
Cassette pour un film photographique

(30) Priority: 20.04.1990 JP 105849/90; 14.05.1990 JP 123494/90
(43) Date of publication of application: 30.10.1991
(73) Proprietor: FUJI PHOTO FILM CO., LTD., Kanagawa (JP)
(72) Inventor: Mizuno, Kazunori, Minami-Ashigara-shi, Kanagawa (JP); Hirose, Masuhiko, Minami-Ashigara-shi, Kanagawa (JP)
(74) Representative: Grünecker, Kinkeldey, Stockmair & Schwanhäusser Anwaltssozietät

(56) References cited:
- GB-A- 708 779
- GB-A- 2 072 622
- US-A- 484 693
- US-A- 4 634 071
- US-A- 4 880 179

## Description

The present invention relates to a photographic film cassette, having a spool with photographic film wound thereon and a cassette shell for containing the film in a light tight manner and for rotatably supporting said spool, said cassette shell having a film passageway adapted for directing the film to the outside through a film passage mouth, said cassette further comprising two light trapping members provided on first and second inside surfaces of said film passageway, respectively, for trapping light, and an inner recess portion extending in parallel to the longitudinal axis of said spool and being formed within at least one of said first and second inside surfaces.

A photographic film cassette of this type is known from US-A-4 848 693 wherein light trapping fabrics such as velvet or plush material is attached to the film passage mouth. It is generally known to attach the light trapping fabrics by means of adhesive agent or double-coated adhesive tape. The light trapping fabrics may consist of known black-dyed velvet constituted by ground fabric and pile threads densely planted thereon. Dense provision of the pile threads fills the film passage mouth to shield the inside of the cassette shell from light coming to the film passage mouth.

When the light trapping fabrics are attached to adhesive agent or double-coated adhesive tape, in that the attachment cannot kept intense, because direct pressure to the surface of the light trapping fabrics bends down the pile threads and causes decrease of light-trapping property. Attachment by means of double-coated adhesive tape is disadvantageous because it might drop down from the film passageway under a condition of high temperature and high humidity.

Moreover, the leading end of the negative film forced to advance may peel off the light trapping fabrics if the light trapping fabrics are not firmly attached to the film passageway.

Another light type film cassette is known from US-4 634 071 having a so-called "floating light seal" which can shift up and downwards to automatically adjust the number of windings of a film spool. Edges of plush-like material preventing ambient light from entering through a film passage mouth are movably received within recesses at the film passage mouth.

With respect to the prior art, the present invention intends to provide a photographic film cassette as defined by the preamble portion of claim 1 which has failure safe light trapping properties at the film passage mouth.

This object is achieved by a photographic film cassette of the type mentioned above, wherein an inner edge of one of said light trapping members which is provided on one of said first and second inside surfaces is attached to the inside of the corresponding inner recess portion which is provided on said one of said first and second inside surfaces in order to prevent blocking of the leading end of the film at the inner edge during film advancement. Moreover, means are provided for enclosing said inner edge within the respective recess portions thereby preventing engagement of the leading end of the film with an edge of a light trapping member. Thus, the light trapping members are firmly attached without failure of light trapping property.

According to a preferred embodiment of the invention, a roughened surface structure is formed in the respective recess portions for keeping firm attachment of the light trapping members to the film passage mouth.

According to a preferred embodiment of the invention, the photographic film cassette comprises light shielding means for shielding a lateral edge portion of the film from light, formed in contacting surfaces of first and second shell halves of the film cassette thereby fogging on lateral edge portions of the negative film can be sufficiently prevented.

According to a further preferred embodiment, the first and second shell halves include respectively first and second edges formed thereon for being joined together to constitute a juncture. The light shielding means include a central projection formed on the first edge while the other edge is formed by an outside projection and an inside projection, both defining a group therebetween for engaging said central projection.

According to another preferred embodiment, the light shielding means is a deformed portion formed along the juncture. Fogging is sufficiently prevented on the lateral edge portions of the film.

The above object and advantages of the present invention will become more apparent from the following detailed description when read in connection with the accompanying drawings, in which :
Fig. 1 is a perspective view illustrating a photographic film cassette according to a preferred embodiment of the present invention;
Fig. 2 is a section view illustrating an inside of the cassette illustrated in Fig. 1;
Fig. 3 is an enlarged section view illustrating an important portion of the cassette illustrated in Fig. 1;
Fig. 4 is an explanatory view illustrating a state disposing adhesive agent on a film passageway of the cassette illustrated in Fig. 1;
Fig. 5 is a section view illustrating an important portion of a cassette according to another preferred embodiment;
Fig. 6 is an exploded perspective view illustrating a cassette in which lateral edge portions are shielded from light;
Fig. 7 is a section view illustrating a film passageway of the cassette illustrated in Fig. 6;
Fig. 8 is a front view illustrating the cassette illustrated in Fig. 6;
Fig. 9 is a front view illustrating a cassette according to a further preferred embodiment;
Fig. 10 is a section view illustrating a film passageway of the cassette illustrated in Fig. 9;
Fig. 11 is a front view illustrating a cassette according to yet another preferred embodiment;
Fig. 12 is a front view illustrating a cassette according to a still further preferred embodiment;
Figs. 13A and 13B are schematic diagrams illustrating a film passage mouth of a cassette according to another preferred embodiment;

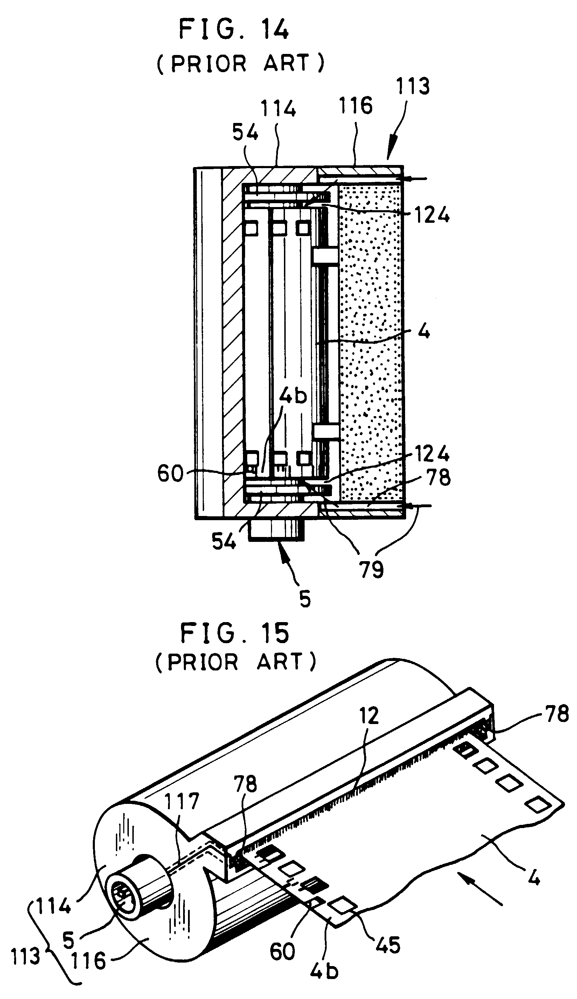

Fig. 14 is an explanatory view illustrating a conventional cassette; and
Fig. 15 is a perspective view illustrating the conventional cassette illustrated in Fig. 14.

### DETAILED DESCRIPTION OF THE PREFERRED EMBODIMENTS OF THE PRESENT INVENTION

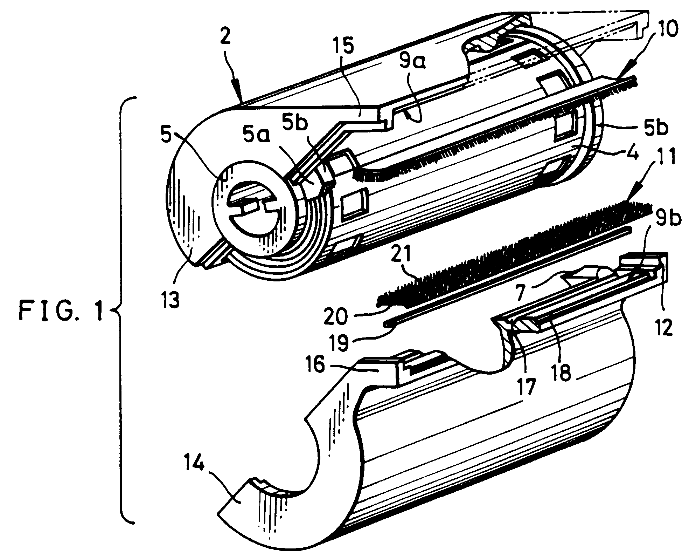

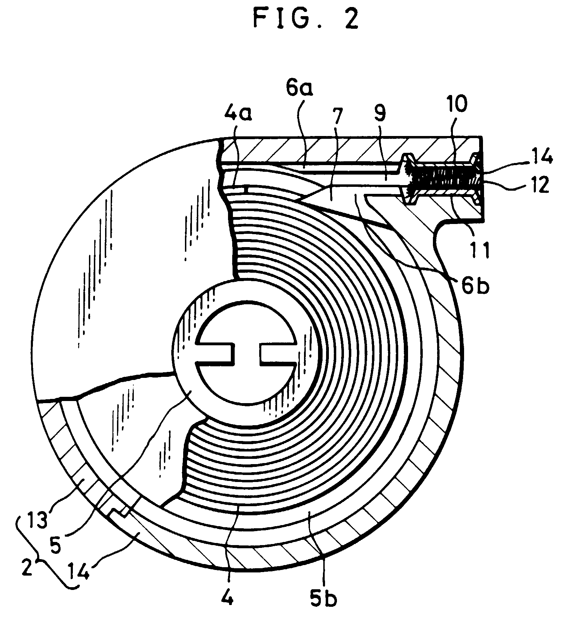

Referring to Figs. 1 and 2, a film cassette 2 is constituted by a cassette shell molded from polystyrene resin of light-shielding property and photographic film e.g. negative film 4 wound on a spool 5 contained therein, which cassette shell consists of an upper shell half 13 and a lower shell half 14 each substantially in the semicylindrical shape. Flanges 5a are formed on positions near both ends of the spool 5 for keep flat both lateral sides of the roll film 4 and for preventing light from entering through a sliding space between the spool 5 and the shell halves 13 and 14. Circumferential lips 5b are integratedly formed on the circular edges of the flanges 5a in order to prevent the negative film 4 from loosening by receiving both lateral edges of the outermost turn of the roll film 4. This construction causes the clockwise rotation of the spool 5 to rotate a leading end 4a of the negative film 4 in the unwinding direction.

A pair of guide ridges 6b are formed on the lower shell half 14, and are provided with separation claws 7 on their inner end. The lateral sides of the separation claws 7 release the lips 5b from the roll film 4 by pressing part of the lips 5b outwardly. The tips of the separation claws 7 separate the leading end 4a from the outermost turn of the roll film 4 when in contact with the leading end 4a. The guide ridges 6b direct the leading end 4a to a film passageway 9 in cooperation with guide ridges 6a formed on the upper shell half 13 later to be described. Upper and lower inside surfaces 9a and 9b of the film passageway 9 are provided with a pair of light trapping fabrics 10 and 11 adhered thereto, which fabrics consist of velvet fabric woven from rayon. The leading end 4a of the negative film 4 is fed between the fabrics 10 and 11 and advanced to the outside of the cassette shell through a film passage mouth 12.

Tongues 15 and 16 are formed on edges of the upper and lower shell halves 13 and 14 along the lengthwise direction of the cassette 2. The fabrics 10 and 11 having been adhered, the upper and lower shell halves 13 and 14 are joined together to cause the tongues 15 and 16 to form the film passageway 9.

Inner recesses 17 are formed each on the upper and lower inside surfaces 9a and 9b extending in a direction vertical to the spool 5. Outer recesses 18 are formed in the film passage mouth 12 on the upper and lower inside surfaces 9a and 9b in parallel with the inner recesses 17. An inclined plane is formed in the inner recesses 17 on the side near the film passage mouth 12 to enlarge the interval between the upper and lower inside surfaces 9a and 9b gradually in the inward direction in parallel with the lengthwise direction of the cassette 2. This inclination prevents the inner recesses 17 from stopping the leading end 4a during advance. The inner recesses 17 in the present embodiment may be replaced with inclined recesses. Acrylic hot-melt adhesive agent 19 is applied to the inner recesses 17 in a solid condition in the shape of a stick.

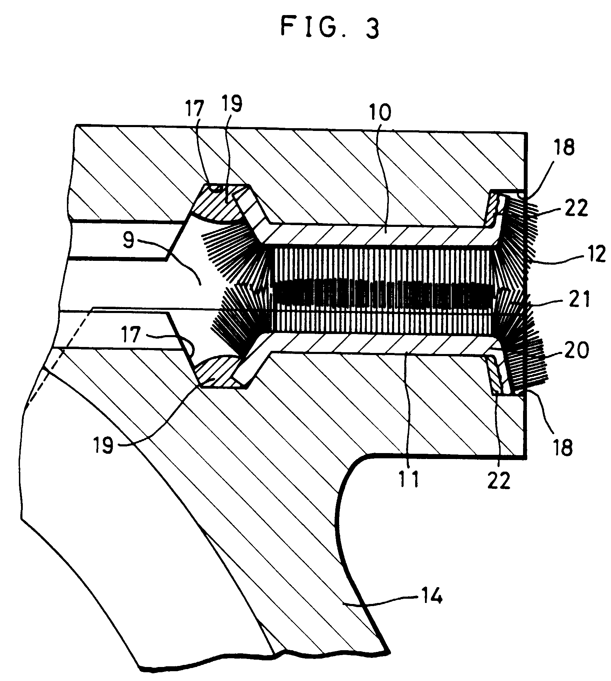

The fabrics 10 and 11 consist of ground fabric 20 and pile threads 21. Hot-melt adhesive agent 22 is applied to a plane in the outer recesses 18 to attach the outer edge of the ground fabric 20 thereto. The inner edges of the fabrics 10 and 11 are inserted in the inner recesses 17, while their outer edges are inserted in the outer recesses 18. The inner and outer edges are heated by a heat sealer to 200^{o}C for 5 seconds. The hot-melt adhesive agent 19 is melted in the inner recesses 17 to enclose the inner edges of the ground fabric 20, while the hot-melt adhesive agent 22 is melted in the outer recesses 18 to attach the outer edges of the ground fabric 20 to the lower shell half 14. When the adhesive agent 19 and 22 is cooled and hardened, the inner edges of the fabrics 10 and 11 are attached to the inside of the inner recesses 17 in an enclosed state as illustrated in Fig. 3. The outer edges of the fabrics 10 and 11 are adhered to the inclined plane in the outer recesses 18.

Although the hot-melt adhesive agent 19 and 20 is melted by the heat sealer in the present embodiment, there are methods of adhesion in fusion and reactivation by use of ultrasound or high frequency energy. Although a solid hot-melt adhesive agent is melted in the inner recesses 17 in this embodiment, melted hot-melt adhesive agent may also be poured therein. Instead of applying the hot-melt adhesive agent 22, the inner edges of the fabrics 10 and 11 may also be enclosed in fusion of a projecting portions formed in advance on the shell halves 13 and 14.

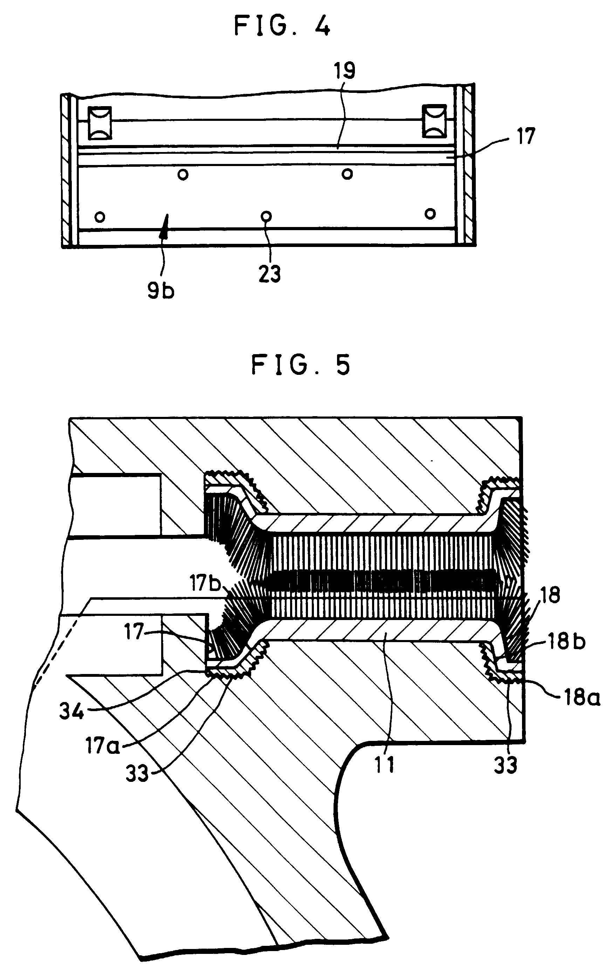

Because the fabrics 10 and 11 are fixed at the inner and outer edges on the shell halves 13 and 14, the middle of the fabrics 10 and 11 has no need of adhesion. However, it is possible to adhere this middle when it is necessary to precisely adjust the degree of contact or lapping between pile threads 21 of the upper and lower fabrics 10 and 11. As illustrated in Fig. 4, hot-melt adhesive agent 23 is applied to the lower inside surface 9b in a dotted disposition, because melting must be carried out without such pressure applied to the whole of the middle of the fabrics 10 and 11 as is large enough to bend the pile threads 21. The hot-melt adhesive agent 23 is preferably prevented from being dotted to be in lines parallel to the advancing direction of the negative film 4. The positions where the pile threads 21 are pressed thus can be sparse, thereby reliably preventing light from entering the cassette 2 through the film passageway 9.

It is noted that, though rayon is used for manufacturing the fabrics 10 and 11 in the present embodiment, other materials also may be used, including: synthetic fibers such as nylon, acrylic fibers, polyester, vinylon, vinyl chloride, vinylidene copolymer, polypropylene and polyethylene polycarbonate; and natural or regenerated fibers such as cupro-ammonium rayon, acetate, cotton and silk. Although the knitted fabrics 10 and 11 having pile threads are used for light trapping members, they also may be film-type light trapping material, nonwoven fabric, fabric or film with pile threads planted thereon, synthetic leather, or sponge of elastic property.

The operation of the above film cassette 2 according to the present invention is now described. The film passageway 9 is shielded from light by the fabrics 10 and 11 so as to keep light-tight the inside of the cassette 2 containing the whole of the roll film 4 up to the leading end 4a. When the camera is loaded with the cassette 2, a drive mechanism incorporated in the camera rotates the spool 5 in the unwinding direction. This rotation causes the leading end 4a to rotate in the same direction until contact with the separation claws 7, which separates the leading end 4a from the outermost turn of the roll film 4. The leading end 4a thus separated is guided by the guide ridges 6a and 6b and fed to the film passageway 9.

The inner recesses 17 in the film passageway 9 has an inclination decreasing the interval of the film passageway 9 in the direction to the outside of the cassette 2, so that the tip 4a of the negative film 4 is never stopped by the inner recesses 17. The leading end 4a is guided by the inclined portions formed in inner positions on the fabrics 10 and 11 to be directed to the position of contact between the upper and lower of the pile threads 21. When the leading end 4a comes in contact with the inner positions of the fabrics 10 and 11, the fabrics 10 and 11 receive a force in the direction of peeling the fabrics 10 and 11. However, they are never peeled off because their inner edges are adhered in a condition enclosed in the hot-melt adhesive agent 19.

The leading end 4a is then advanced to the outside of the cassette 2 through the film passageway 9 between the fabrics 10 and 11, during which the inside of the cassette 2 is kept light-tight because the pile threads 21 remain in contact with both surfaces of the negative film 4.

In Fig. 5 illustrating another preferred embodiment of the inventive film cassette, rough or uneven surfaces are formed by providing tiny grooves 33 on a bottom surface 17a and an inclined surface 17b in the inner recesses 17, and a bottom surface 18a and an inclined surface 18b forming the outer recesses 18. The tiny grooves 33 are formed integratedly with the upper and lower shell halves 13 and 14 when they are molded. Each of the tiny grooves 33 has a very small size, such that two adjacent tiny grooves form a ridge having a tip which has an interval of 0.1 mm with an adjacent similar tip. Although the inside of the recesses 17 and 18 are formed with tiny grooves 33, they may be formed with tiny recesses in a densely dotted disposition. Such construction makes it possible to enlarge the area to be attached to the fabrics 10 and 11. Acrylic hot-melt adhesive agent is in advance applied to the bottom surface 17a, the inclined surface 17b, the bottom surface 18a and the inclined surface 18b.

The inner and outer edges of the fabrics 10 and 11 are each placed and heated with the adhesive agent on the adhesive-applying surfaces including the bottom surface 17a, the inclined surface 17b, the bottom surface 18a and the inclined surface 18b. The adhesion is thus intensified. In the present embodiment, the shell halves 13 and 14 are formed by molds with tiny ridges corresponding to the tiny grooves. Alternatively, molds with tiny projections may be used so that corresponding tiny recesses are formed on the shell halves 13 and 14. Such tiny recesses instead may be formed by filing the molded shell halves. Rough surfaces with such tiny grooves or tiny recesses may be formed not only in the inner and outer recesses 17 and 18 but on the whole surface of the film passageway 9 in contact with the fabrics 10 and 11.

In the above embodiment, the hot-melt adhesive agent 34 is in advance provided in the shell halves 13 and 14 and melted to adhere the fabrics 10 and 11. However, melted hot-melt adhesive agent may be poured when the fabrics 10 and 11 is adhered. Alternatively hot-melt adhesive agent may be applied to both inner and outer edges of the fabrics 10 and 11 to be melted. The hot-melt adhesive agent may be replaced with pressure-sensitive adhesive agent, adhesive tape with pressure-sensitive adhesive agent applied to a base material, or hardening agent to be hardened naturally or by heat after adhesion.

Experiments were conducted to compare the above embodiments and a conventional film cassette regarding the force of adhering the light trapping fabrics. The light trapping fabrics of Sample 1 were fixed on the film passageway by enclosing their inner edges. The light trapping fabrics of Sample 2 were fixed on the film passageway by attaching them to the adhesive-applying surfaces in the recesses having the tiny grooves. The light trapping fabrics of Comparative Example were adhered to a film passageway of Sample 2 lacking the recesses. An Instron tension tester was used for the experiments. Part of the adhered light trapping fabrics was peeled off in the direction vertical to the film advancing direction. The width of the light trapping fabrics was 10 mm. The adhesive force was measured with the peeling speed determined to be 10 cm per second.

Having been kept for 24 hours under the condition of 23^{o}C in temperature and 65 % in relative humidity after adhesion, the adhesive force was 1240 g / 10 mm in Sample 1, 950 g / 10 mm in Sample 2, and 320 g / 10 mm in Comparative Example. Having been kept for 48 hours under the condition of 60^{o}C in temperature and 80 % in relative humidity, the adhesive force was 1250 g / 10 mm in Sample 1, 850 g / 10 mm in Sample 2, and 150 g / 10 mm in Comparative Example.

These results of measurement show that the constructions of the present invention keep the adhesive force apparently stronger than that of a conventional film cassette. With the inner edges of the light trapping fabrics enclosed and attached as in Sample 1, the adhesive force can be highly strong. This strength is unchanged even under a high temperature and a high humidity.

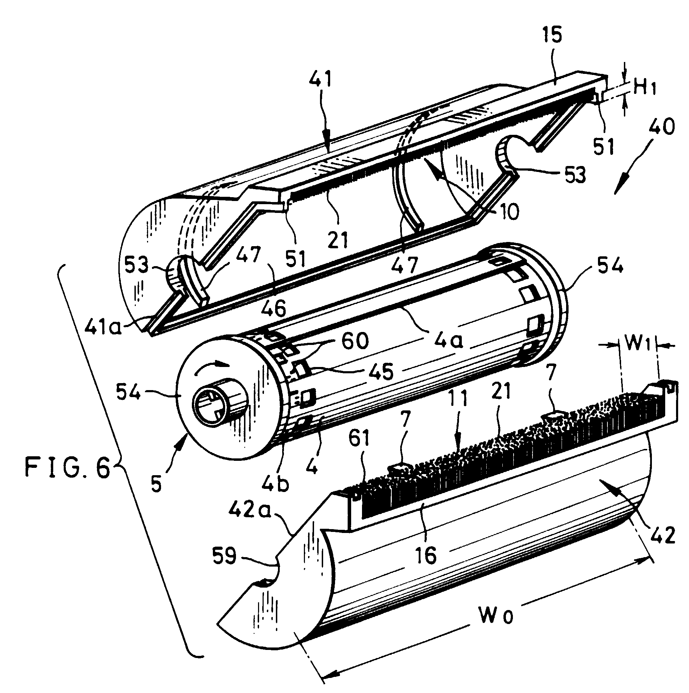

A film cassette 40 illustrated in Fig. 6 serves to prevent fogging from developing on the lateral edge portions of the negative film 4. Elements similar to those in the above embodiments are designated by the same reference numerals. The cassette 40 consists of an upper and lower shell halves 41 and 42 and the spool 5 with the negative film 4 wound thereon. A pair of annular ridges 47 are formed on an interior surface 46 of the upper shell half 41 for reducing the area of contact between the outermost turn of the roll film 4 and the interior surface 46, thereby making it easy to advance the leading end 4a as well as preventing the roll film 4 from loosening. Both shell halves 41 and 42 are made from polymer of mixture of high-impact polystyrene with general polystyrene in the ratio of 50 to 50 in weight with carbon black added thereto by 0.5 % in weight. The upper shell half 41 is provided with a stepped edge 41a to be joined with the lower shell half 42. The stepped edge 41a is constituted by a central projection 51 of a height H₁. Both end faces of the upper shell half 41 are provided with bearing recesses 53 for rotatably supporting the spool 5 in cooperation with the counterpart of the lower shell half 42. The spool 5 is provided with a pair of ordinary flanges 54. Lateral edge portions 4b of the negative film 4 carry DX code 60 for representing the type of film to be used for printing. The fabrics 10 and 11 each disposed on the tongues 15 and 16 have a width W₁ of 5 mm. The separation claws 7 formed on the tongue 16 serve just to separate the leading end 4a, from which claws annular ridges (not shown) on the interior surface of the lower shell half 42 extend to be connected to the ridges 47. The lower shell half 42 is provided with bearing recesses 59 on both end faces.

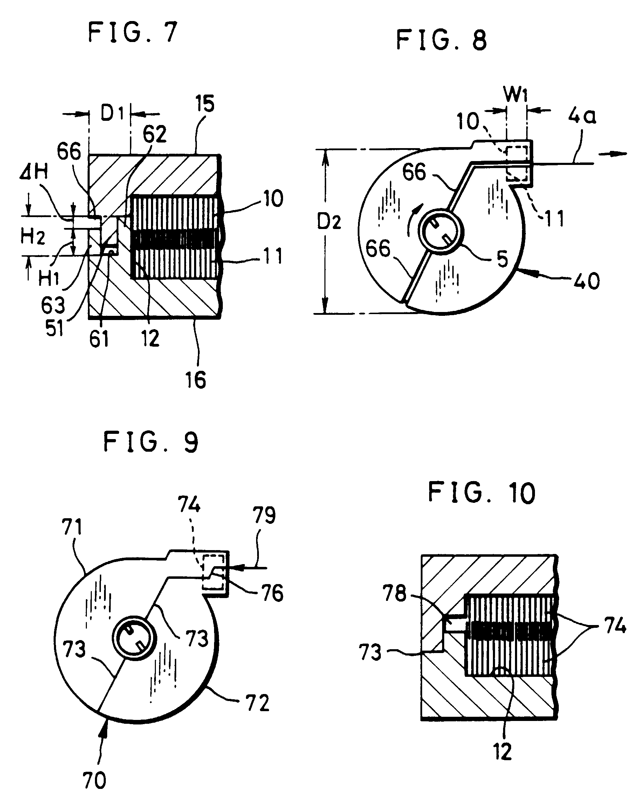

A stepped edge 42a of the lower shell half 42 is retracted on the center forming a groove 61. On the inside with reference to the lower shell half 42, a contact projection 62 defines the groove 61 and has a height H₂, while an outside projection 63 defines the same on the outside and has the height of H₁ as illustrated in Fig. 7. Both of the shell halves 41 and 42 have a thickness D₁ of 0.8 mm. Junction of the shell halves 41 and 42 causes the tongues 15 and 16 to form the film passageway 9 and the film passage mouth 12. A spacing or groove 66 is defined between the shell halves 41 and 42 and has a width ΔH which is equal to H₂ minus H₁, and substantially determined to be 0.15 mm. The spacing 66 surrounds the exterior periphery of the cassette 40 as illustrated in Fig. 8. Because the interior surface of the cassette shell has no such spacing, external light is prevented from entering the cassette 40 through the stepped edges 41a and 42a, thereby preventing fogging from being generated on the lateral edge portions 4b. The diameter D₂ of the cassette 40 is determined to be 23 mm. Its length W₀ in the direction parallel to the spool 5 is determined to be 41 mm.

When the exposure of the film 4 is completed, the cassette 40 is unloaded from the camera. The stepped edges 41a and 42a reliably shield the negative film 4 in the film passageway 9. Accordingly the lateral edge portions 4b of the negative film 4 involve no fogging so that the DX code 60 can be read out at the printing time. Experiments were made regarding the capability in shielding light. Ten film cassettes the same as the above cassette 40 and ten conventional cassettes are subjected to light of 100,000 lux for 3 minutes, from which cassettes negative film was drawn out and developed. In five of the ten conventional cassette, there was fogging on the lateral edge portions of the roll film on the 3 or 5 outermost turns, while no fogging was recognized on the negative film 4 of the cassettes the same as the cassette 40.

In Fig. 9 illustrating a film cassette 70 according to another preferred embodiment, a juncture 73 of upper and lower film cassettes 71 and 72 includes a deformed or crooked portion 76 in a position beside light trapping fabric 74, where the juncture 73 is not straight. The film passage mouth 12 of the cassette 70 involves a spacing 78 on the lateral sides as illustrated in Fig. 10. External light 79 entering the cassette 70 through the spacing 78, however, is reflected and scattered by the crooked portion 76 and absorbed by the fabric 74. Although the spacing 78 is the same as that included in a conventional cassette, fogging is reliably prevented on the lateral edge portions 4b of the negative film 4. An experiment was made regarding the cassette 70 in a manner the same as the above embodiment. No fogging was recognized.

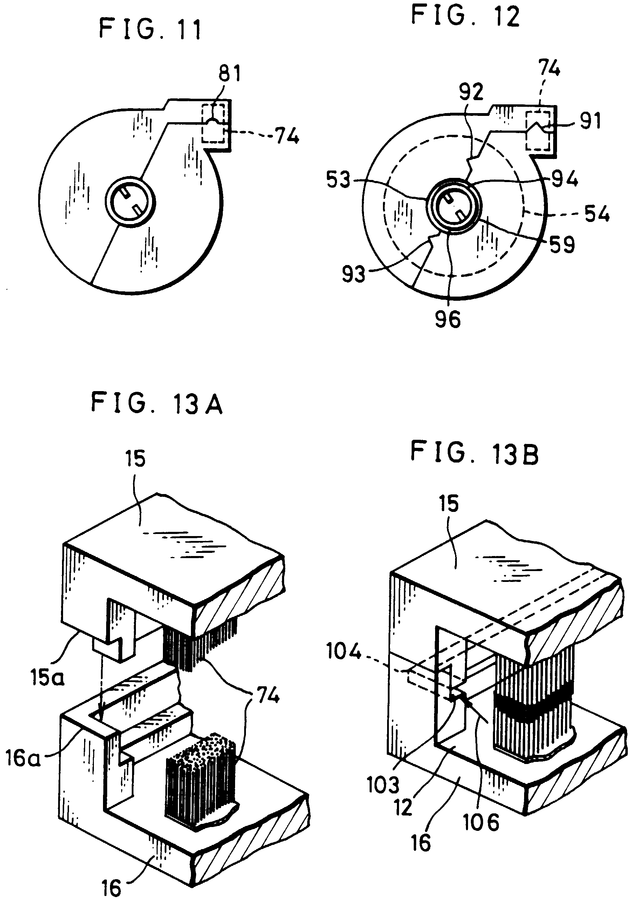

A similar effect is brought by a crooked portion 81 in the arcuate shape beside the fabric 74 as illustrated in Fig. 11. The fabric 74 may be replaced with a sponge-type light trapping member disposed in the film passageway 9.

In addition to the crooked portion 91 beside the fabric 74, crooked portions 92 and 93 may be arranged beside the flanges 54 of the spool 5 as illustrated in Fig. 12. Through spacings 94 and 96 defined between the spool 5 and the bearing recesses 53 and 59, external light enters the cassette shell, but is reflected/scattered by the crooked portions 92 and 93 and absorbed by the flanges 54. It is accordingly possible to completely shield the cassette from light. It is noted that the spacings 94 and 96 are illustrated in exaggeration particularly in Fig. 12 and actually have a tiny size.

Furthermore, crooked edges 15a and 16a may be formed on the tongues 15 and 16 to become parallel with a plane defined by the film passage mouth 12 as illustrated in Fig. 13A. When two shell halves are fitted together, a spacing 103 is defined along the juncture inside the film passage mouth 12 as illustrated in Fig. 13B. The spacing 103 is crooked at an inner corner 104. Entering the spacing 103, external light 106 is reflected/scattered by the inner corner 104 and absorbed by the fabric 74. Light shielding capacity is highly improved by this construction beside the lateral edge portions of the negative film.

Any of the above-described embodiments involves a self-advancing film cassette with even the leading end 4a of the roll film 4 contained in the cassette shell, in which the rotation of the spool 5 causes the leading end 4a to advance to the outside of the cassette shell. However, these embodiments can be applied to a general type of film cassette with the leading end 4a of the negative film 4 protruded to the outside of the cassette shell.

## Claims

1. A photographic film cassette (2) having a spool (5) with photographic film (4) wound thereon and a cassette shell (13, 14) for containing the film (4) in a light tight manner and for rotatably supporting said spool (5), said cassette shell (13, 14) having a film passageway (9) adapted for directing the film (4) to the outside through a film passage mouth (12), said cassette (13, 14) further comprising:
two light trapping members (10, 11) provided on first and second inside surfaces (9a, 9b) of said film passageway (9), respectively, for trapping light; and
an inner recess portion (17) extending in parallel to the longitudinal axis of said spool (5) and being formed within at least one of said first and second inside surfaces (9a, 9b),
**characterised in that**
an inner edge of one of said light trapping members (10, 11) which is provided on one of said first and second inside surfaces (9a, 9b) is attached to the inside of the corresponding inner recess portion (17) which is provided on said one of said first and second inside surfaces (9a, 9b) in order to prevent blocking of the leading end (4a) of the film (4) at said inner edge during film advancement, and that means (19) are provided for enclosing said inner edge within the respective recess portion (17).

2. Photographic film cassette according to claim 1, **characterised in that** each of said first and second inside surfaces (9a, 9b) is provided with said inner recess portion (17) and said means (19) for enclosing the inner edge of the corresponding light trapping member.

3. Photographic film cassette according to claim 1 or 2, **characterised in that** said cassette shell (13, 14) includes a first shell half (13) having said first inside surface (9a) and a second shell half (14) having said second inside surface (9b), for dividing said film passageway (9), said shell halves forming an opening for supporting said spool (5).

4. Photographic film cassette according to one of claims 1 to 3, **characterised in that** said inner recess (17) comprises a surface portion inclined to the film advancing path and facing towards the interior of said cassette, said inclined surface portion widens towards the interior of the cassette.

5. Photographic film cassette according to one of claims 1 to 4, **characterised by** an outer recess (18) provided on each of said first and second inside surfaces (9a, 9b) for attaching thereto an outer edge of the respective light trapping member (10, 11).

6. Photographic film cassette according to claim 5, **characterised in that** each of said outer recesses (18) comprises a surface portion inclined to the film advancing path and facing towards the outside.

7. Photographic film cassette according to one of claims 1 to 6, **characterised in that** said inner recesses (17) are provided with a roughened surface structure for increasing the attachment force of said light trapping members (10, 11).

8. Photographic film cassette according to claim 5 or 6, **characterised in that** said outer recesses (18) are provided with a roughened surface structure for increasing the attachment force of said light trapping members (10, 11).

9. Photographic film cassette according to claim 7 or 8, **characterised in that** said roughened surface structure includes a plurality of tiny grooves (33) formed in parallel with said spool (5).

10. Photographic film cassette according to one of claims 7 to 9, **characterised in that** said roughened surface structure includes a plurality of tiny recesses.

11. Photographic film cassette according to one of claims 1 to 10, **characterised in that** said inner edges of said light trapping members (10, 11) are attached to the respective inner recess (17) by means of adhesive agent (19).

12. Photographic film cassette according to claim 11, **characterised in that** said adhesive agent (19) is applicable to the respective inner recess (17) in solid condition in form of a stick-like element.

13. Photographic film cassette according to claim 11 or 12, **characterised in that** at least one of said first and second inside surfaces (9a, 9b) is provided with adhesive agent in a dotted disposition between said inner and outer recesses (17, 18) for attaching said respective light trapping member (10, 11) thereto.

14. Photographic film cassette according to one of claims 1 to 13, **characterised in that** said light trapping members (10, 11) are fabrics.

15. Photographic film cassette according to one of claims 1 to 14, **characterised by** means for guiding the leading end (4a) of said film (4) towards and through said film passageway (9) during unwinding of the film (4), said guiding means comprising separation claws (7) formed inside said cassette on said cassette shell for separating said leading end (4) of said film from film wound up on said spool (5).

16. Photographic film cassette according to claim 15, **characterised in that** said guiding means comprises an annular ridge (47) formed on an inner surface of said cassette for contacting the outermost turn of the wound up film (4).

17. Photographic film cassette according to claim 15 or 16, **characterised by** a projection member projecting from an edge of a flange of said spool (5) in a direction towards the middle of said cassette shell for contacting the outermost turn of said wound up film (4) to prevent said wound up film from loosening, said outermost turn being released from said projection member by said separation (7) claws pressing said projection member.

18. Photographic film cassette according to one of claims 3 to 17, **characterised by** light shielding means for shielding a lateral edge portion of said film (4) from light, formed in contacting surfaces of said first and second shell halves (13, 14).

19. Photographic film cassette according to claim 18, **characterised in that** each contacting surface of said first and second shell halves (13, 14) is provided with a stepped edge (41a, 42a) to be joined together for preventing light to penetrate into the cassette between said contacting surfaces, one (41a) of said stepped edges is provided with a central projection (51) while the other (42a) of said stepped edges is formed by an outside projection (63) and an inside projection (62), both defining a groove (61) therebetween for engaging said central projection (51).

20. Photographic film cassette according to claim 18 or 19, **characterised in that** said light shielding means comprises a stepped or recess portion (76, 81, 92) formed lengthwise to the edge of one shell half and a receiving portion formed on the other shell half so as to engage said stepped or recess portion (76, 81, 92).

21. Photographic film cassette according to claim 20, **characterised in that** said light shielding means comprising said stepped or recess portion (76, 81, 92) and said receiving portion are arranged on said contacting surfaces of said shell halves at lateral ends of said light trapping members (10, 11).

22. Photographic film cassette according to one of claims 18 to 21, **characterised in that** said light shielding means comprising said stepped or recess portion (76, 81, 92) and said receiving portion are arranged on said contacting surfaces at both front faces of the film cassette through which the longitudinal axis of said spool (5) extends.

23. Photographic film cassette according to one of claims 20 to 22, **characterised in that** said stepped or recess portion (91) is V-shaped.

24. Photographic film cassette according to one of claims 20 to 22, **characterised in that** said stepped or recess portion (81) has an arcuate shape.

25. Photographic film cassette according to one of claims 20 to 22, **characterised in that** said stepped or recess portion (76) is crooked.

## Patentansprüche

1. Kassette (2) für photographische Filme mit einer Spule (5), um die ein photographischer Film (4) gewickelt ist, und einer Kassettenschale (13,14) zur lichtdichten Aufnahme des Filmes (4) und zur drehbaren Abstützung der Spule (5), wobei die Kassettenschale (13,14) eine Filmdurchgangsöffnung (9) aufweist, die zur Führung des Filmes (4) nach außen durch eine Filmdurchgangsmündung (12) dient, wobei die Kassette (13,14) weiterhin aufweist:
zwei Lichtschutzelemente (10,11), die jeweils an ersten und zweiten Innenflächen (9a,9b) der Filmdurchgangsöffnung (9) zum Abhalten von Licht vorgesehen sind; und
einen inneren Vertiefungsabschnitt (17), der sich parallel zur Längsachse der Spule (5) erstreckt und zumindest in einer der ersten und zweiten Innenflächen (9a,9b) ausgebildet ist,
**dadurch gekennzeichnet**, daß
ein Innenrand eines der Lichtschutzelemente (10,11), das an einer der ersten und zweiten Innenflächen (9a,9b) vorgesehen ist, an der Innenseite des zugehörigen inneren Vertiefungsabschnitts (17) angebracht ist, der an einem der ersten und zweiten Innenflächen (9a,9b) vorgesehen ist, um ein Blockieren des Führungsendes (4a) des Filmes (4) an dem Innenrand während des Filmtransportes zu verhindern, und daß Vorrichtungen (19) zur Einschließung des Innenrandes innerhalb des jeweiligen Vertiefungsabschnittes (17) vorgesehen sind.

2. Kassette für einen photographischen Film nach Anspruch 1, **dadurch gekennzeichnet**, daß jede der ersten und zweiten Innenflächen (9a,9b) mit dem inneren Vertiefungsabschnitt (17) und den Vorrichtungen (19) zum Einschließen des Innenrandes des zugehörigen Lichtschutzelementes versehen ist.

3. Kassette für einen photographischen Film nach Anspruch 1 oder 2, **dadurch gekennzeichnet**, daß die Kassettenschale (13,14) eine erste Schalenhälfte (13) aufweist, die die erste Innenfläche (9a) besitzt, und eine zweite Schalenhälfte (14), die die zweite Innenfläche (9a) besitzt, zur Teilung der Filmdurchgangsöffnung (9), wobei die Schalenhälften eine Öffnung zur Abstützung der Spule (5) bilden.

4. Kassette für einen photographischen Film nach einem der Ansprüche 1 bis 3, **dadurch gekennzeichnet**, daß die innere Vertiefung (17) einen gegenüber dem Filmtransportweg geneigten und in das Innere der Kassette weisenden Flächenabschnitt aufweist, der sich in Richtung des Kassetteninneren aufweitet.

5. Kassette für einen photographischen Film nach einem der Ansprüche 1 bis 4, **dadurch gekennzeichnet**, daß eine äußere Vertiefung (18) an jeder der ersten und zweiten Innenflächen (9a,9b) vorgesehen ist, um daran einen Außenrand des jeweiligen Lichtschutzelementes (10,11) anzubringen.

6. Kassette für einen photographischen Film nach Anspruch 5, **dadurch gekennzeichnet**, daß die äußere Vertiefung (18) einen in Richtung des Filmtransportweges geneigten und nach außen weisenden Flächenabschnitt aufweist.

7. Kassette für einen photographischen Film nach einem der Ansprüche 1 bis 6, **dadurch gekennzeichnet**, daß die inneren Vertiefungen (17) mit einer aufgerauhten Oberflächenformation zur Erhöhung der Befestigungskraft der Lichtschutzelemente (10,11) versehen sind.

8. Kassette für einen photographischen Film nach Anspruch 5 oder 6, **dadurch gekennzeichnet**, daß die äußeren Vertiefungen (18) mit einer aufgerauhten Oberflächenformation zur Erhöhung der Befestigungskraft der Lichtschutzelemente (10,11) versehen sind.

9. Kassette für einen photographischen Film nach Anspruch 7 oder 8, **dadurch gekennzeichnet**, daß die aufgerauhte Oberflächenformation eine Vielzahl von parallel zu der Spule (5) ausgebildeten Nuten (33) aufweist.

10. Kassette für einen photographischen Film nach einem der Ansprüche 7 bis 9, **dadurch gekennzeichnet**, daß die aufgerauhte Oberflächenstruktur eine Vielzahl von kleinen Vertiefungen aufweist.

11. Kassette für einen photographischen Film nach einem der Ansprüche 1 bis 10, **dadurch gekennzeichnet**, daß die Innenränder der Lichtschutzelemente (10,11) durch ein Klebemittel (19) an den jeweiligen inneren Vertiefungen (17) befestigt sind.

12. Kassette für photographische Filme nach Anspruch 11, **dadurch gekennzeichnet**, daß das Klebemittel (19) in festem Zustand in Form eines stabartigen Elementes an der jeweiligen inneren Vertiefung (17) anbringbar ist.

13. Kassette für photographische Filme nach einem der Ansprüche 11 oder 12, **dadurch gekennzeichnet**, daß zumindest eine der ersten und zweiten Innenflächen (9a,9b) zwischen den inneren und äußeren Vertiefungen (17,18) mit einem Klebemittel in getupfter Anordnung versehen ist, um die jeweiligen Lichtschutzelemente (10,11) daran anzubringen.

14. Kassette für photographische Filme nach einem der Ansprüche 1 bis 13, **dadurch gekennzeichnet**, daß die Lichtschutzelemente (10,11) Gewebe sind.

15. Kassette für photographische Filme nach einem der Ansprüche 1 bis 14, **gekennzeichnet durch** eine Vorrichtung zum Leiten des Führungsendes (4a) des Filmes (4) in Richtung und durch die Filmdurchgangsöffnung (9) während des Abwickelns des Filmes (4), wobei die Leitvorrichtung innerhalb der Kassette an der Kassettenschale ausgebildete Trennklauen (7) aufweist, zur Trennung des Führungsendes (4a) des Filmes von dem auf der Spule (5) aufgewickelten Film.

16. Kassette für phototgraphische Filme nach Anspruch 15, **dadurch gekennzeichnet**, daß die Leitvorrichtung eine an der Innenwand der Kassette ausgebildete ringförmige Rippe (47) zur Anlage der äußersten Windung des aufgewickelten Filmes (4) aufweist.

17. Kassette für photographische Filme nach einem der Ansprüche 15 oder 16, **gekennzeichnet durch** ein Vorsprungsteil, das von einer Kante eines Flansches der Spule (5) in Richtung der Mitte der Kassettenschale zur Anlage der äußersten Windung des aufgewickelten Filmes (4) hervorsteht, um ein Lösen des aufgewickelten Filmes zu verhindern, wobei die äußerste Windung durch die die Vorsprungteile drückenden Trennklauen (7) von den Vorsprungteilen freigegeben wird.

18. Kassette für photographische Filme nach einem der Ansprüche 3 bis 17, **gekennzeichnet durch** Lichtabschirmvorrichtungen zur Abschirmung eines seitlichen Randabschnittes des Filmes (4) gegen Licht, die in Berührflächen der ersten und zweiten Schalenhälften (13,14) ausgebildet sind.

19. Kassette für photographische Filme nach Anspruch 18, **dadurch gekennzeichnet**, daß jede Berührfläche der ersten und zweiten Schalenhälfte (13,14) mit miteinander verbindbaren gestuften Kanten (41a,42a) versehen sind zur Verhinderung des Eindringens von Licht zwischen den Berührflächen, wobei eine (41a) der gestuften Kanten mit einem Zentralvorsprung (51) versehen ist, und die andere (42a) der gestuften Kanten mit einem außenseitigen Vorsprung (63) und einem innenseitigen Vorsprung (62) versehen ist, die beide zwischeneinander eine Nut (61) zur Aufnahme des Zentralvorsprunges (51) bilden.

20. Kassette für photographische Filme nach Anspruch 18 oder 19, **dadurch gekennzeichnet**, daß die Lichtabschirmvorrichtungen einen gestuften oder vertieften Abschnitt (76,81,92) aufweisen, der entlang der Kante einer Schalenhälfte ausgebildet ist und einen Aufnahmeabschnitt an der anderen Schalenhälfte, der zur Aufnahme des gestuften oder vertieften Abschnittes (76,81,92) ausgebildet ist.

21. Kassette für photographische Filme nach Anspruch 20, **dadurch gekennzeichnet**, daß die Lichtabschirmvorrichtungen, die den gestuften oder vertieften Abschnitt (76,81,92) aufweisen, und der Aufnahmeabschnitt an den Berührflächen der Schalenhälften an seitlichen Enden der Lichtschutzelemente (10,11) angeordnet sind.

22. Kassette für photographische Filme nach einem der Ansprüche 18 bis 21, **dadurch gekennzeichnet**, daß die Lichtabschirmvorrichtungen, die den gestuften oder vertieften Abschnitt (76,81,92) aufweisen, und der Aufnahmeabschnitt an den Berührflächen an beiden Vorderseiten der Filmkassette, durch die sich die Längsachse der Spule (5) erstreckt, angeordnet sind.

23. Kassette für photographische Filme nach einem der Ansprüche 20 bis 22, **dadurch gekennzeichnet**, daß der gestufte oder vertiefte Abschnitt (91) V-förmig ausgebildet ist.

24. Kassette für photographische Filme nach einem der Ansprüche 20 bis 22, **dadurch gekennzeichnet**, daß der gestufte oder vertiefte Abschnitt (81) eine bogenförmige Form besitzt.

25. Kassette für photographische Filme nach einem der Ansprüche 20 bis 22, **dadurch gekennzeichnet**, daß der gestufte oder vertiefte Abschnitt (76) gekrümmt ausgebildet ist.

## Revendications

1. Cassette à film photographique (2) comprenant une bobine (5) avec un film photographique (4) enroulé sur celle-ci et une coque de cassette (13, 14) pour contenir le film (4) d'une manière abritée vis-à-vis de la lumière et pour supporter en rotation ladite bobine (5), ladite coque de cassette (13, 14) comportant un passage à film (9) adapté à diriger le film (4) vers l'extérieur à travers une embouchure (12) du passage à film, ladite cassette (13, 14) comprenant en outre :
- deux éléments de piégeage de lumière (10, 11) prévus sur une première et une seconde surface intérieure (9a, 9b) dudit passage à film (9), respectivement, pour piéger la lumière ; et
- une partie évidée intérieure (17) qui s'étend parallèlement à l'axe longitudinal de ladite bobine (5) et étant formée à l'intérieur de l'une au moins desdites première et seconde surfaces intérieures (9a, 9b),
caractérisée en ce que
une bordure intérieure de l'un desdits éléments de piégeage de lumière (10, 11), qui est prévue sur l'une desdites première et seconde surfaces intérieures (9a, 9b), est attachée sur l'intérieur de la partie évidée intérieure correspondante (17) qui est prévue sur ladite surface intérieure parmi lesdites première et seconde surfaces intérieures (9a, 9b) afin d'empêcher le blocage de l'extrémité d'amorce (4a) du film (4) au niveau de ladite bordure inférieure pendant l'avance du film, et en ce que des moyens (19) sont prévus pour enfermer ladite bordure intérieure à l'intérieur de la partie évidée respective (17).

2. Cassette à film photographique selon la revendication 1, caractérisée en ce que chacune desdites première et seconde surfaces intérieures (9a, 9b) est pourvue de ladite partie évidée intérieure (17) et desdits moyens (19) pour enfermer la bordure intérieure de l'élément de piégeage de lumière correspondant.

3. Cassette à film photographique selon l'une ou l'autre des revendications 1 et 2, caractérisée en ce que ladite coque de cassette (13, 14) inclut une première demi-coque (13) ayant ladite première surface intérieure (9a) et une seconde demi-coque (14) ayant ladite seconde surface intérieure (9b), pour diviser ledit passage à film (9), lesdites demi-coques formant une ouverture pour supporter ladite bobine (5).

4. Cassette à film photographique selon l'une quelconque des revendications I à 3, caractérisée en ce que ledit évidement intérieur (17) comprend une partie de surface inclinée vers le trajet d'avance du film et faisant face vers l'intérieur de ladite cassette, ladite partie de surface inclinée s'élargissant vers l'intérieur de la cassette.

5. Cassette à film photographique selon l'une quelconque des revendications 1 à 4, caractérisée par un évidement extérieur (18) prévu sur chacune desdites première et seconde surfaces intérieures (9a, 9b) pour y attacher une bordure extérieure de l'élément de piégeage de lumière correspondant (10, 11).

6. Cassette à film photographique selon la revendication 5, caractérisée en ce que chacun desdits évidements extérieurs (18) comprend une partie de surface inclinée vers le trajet d'avance du film et faisant face vers l'extérieur.

7. Cassette à film photographique selon l'une quelconque des revendications 1 à 6, caractérisée en ce que lesdits évidements intérieurs (17) sont pourvus d'une structure de surface rugueuse pour augmenter la force d'attache desdits éléments de piégeage de lumière (10, 11).

8. Cassette à film photographique selon l'une ou l'autre des revendications 5 ou 6, caractérisée en ce que lesdits évidements extérieurs (18) sont pourvus d'une structure de surface rugueuse pour augmenter la force d'attache desdits éléments de piégeage de lumière (10, 11).

9. Cassette à film photographique selon l'une ou l'autre des revendications 7 et 8, caractérisée en ce que ladite structure de surface rugueuse inclut une pluralité de gorges minuscules (33) formées en parallèle avec ladite bobine (5).

10. Cassette à film photographique selon l'une quelconque des revendications 7 à 9, caractérisée en ce que ladite structure de surface rugueuse inclut une pluralité d'évidements minuscules.

11. Cassette à film photographique selon l'une quelconque des revendications 1 à 10, caractérisée en ce que lesdits bordures intérieures desdits éléments de piégeage de lumière (10, 11) sont attachées dans les évidements intérieurs respectifs (17) au moyen d'un agent adhésif (19).

12. Cassette à film photographique selon la revendication 11, caractérisée en ce que ledit agent adhésif (19) est applicable dans l'évidement intérieur respectif (17) dans une condition solide sous forme d'un élément analogue à une baguette.

13. Cassette à film photographique selon l'une ou l'autre des revendications 11 et 12, caractérisée en ce que l'une au moins desdites première et seconde surfaces intérieures (9a, 9b) est pourvue d'un agent adhésif sous une disposition par points entre lesdits évidements intérieurs et extérieurs (17, 18) pour y attacher ledit élément de piégeage de lumière respectif (10, 11).

14. Cassette à film photographique selon l'une quelconque des revendications 1 à 13, caractérisée en ce que lesdits éléments de piégeage de lumière (10, 11) sont des tissus.

15. Cassette à film photographique selon l'une quelconque des revendications 1 à 14, caractérisée par des moyens pour guider l'extrémité d'amorce (4a) dudit film (4) vers et à travers ledit passage à film (9) pendant le déroulement du film (4), lesdits moyens de guidage comprenant des griffes de séparation (7) formées à l'intérieur de ladite cassette sur ladite coque de cassette pour séparer ladite extrémité d'amorce (4) dudit film depuis le film enroulé sur ladite bobine (5).

16. Cassette à film photographique selon la revendication 15, caractérisée en ce que lesdits moyens de guidage comprennent une nervure annulaire (47) formée sur une surface inférieure de ladite cassette pour venir en contact avec la spire extérieure du film embobiné (4).

17. Cassette à film photographique selon l'une ou l'autre des revendications 15 ou 16, caractérisée par un élément en projection qui se projette depuis un bord d'une bride de ladite bobine (5) dans une direction vers le milieu de ladite coque de cassette pour venir en contact avec la spire extérieure dudit film embobiné (4) pour empêcher le relâchement dudit film embobiné (4), ladite spire extérieure étant libérée dudit élément en projection par le fait que lesdites griffes de séparation (7) pressent ledit élément en projection.

18. Cassette à film photographique selon l'une quelconque des revendications 3 à 17, caractérisée par des moyens formant écran pour isoler une partie de bordure latérale dudit film (4) vis-à-vis de la lumière, formés dans des surfaces en contact de la première et de la seconde demi-coque (13, 14).

19. Cassette à film photographique selon la revendication 18, caractérisée en ce que chaque surface en contact de la première et de la seconde demi-coque (13, 14) est pourvue d'un bord en gradins (41a, 42a) qui doivent être réunis ensemble pour empêcher à la lumière de pénétrer dans la cassette entre lesdites surfaces en contact, l'un desdits bords en gradins (4 la) étant pourvu d'une projection centrale (51) tandis que l'autre desdits bords en gradins (42a) est formé par une projection extérieure (63) et par une projection intérieure (62) qui définissent toutes deux une gorge (61) entre elles pour engager ladite projection centrale (51).

20. Cassette à film photographique selon l'une ou l'autre des revendications 18 ou 19, caractérisée en ce que lesdits moyens formant écran de lumière comprennent une partie étagée ou évidée (76, 81, 92) formée dans le sens de la longueur sur la bordure d'une demi-coque, et une partie de réception formée sur l'autre demi-coque de manière à engager ladite partie étagée ou évidée (76, 81, 92).

21. Cassette à film photographique selon la revendication 20, caractérisée en ce que lesdits moyens formant écran de lumière, qui comprennent ladite partie étagée ou évidée (76, 81, 92) et ladite partie de réception, sont agencés sur lesdites surfaces en contact desdites demi-coques à des extrémités latérales desdits éléments de piégeage de lumière (10, 11).

22. Cassette à film photographique selon l'une quelconque des revendications 18 à 21, caractérisée en ce que lesdits moyens formant écran de lumière qui comprennent ladite partie étagée ou évidée (76, 81, 92) et ladite partie de réception, sont agencés sur lesdites surfaces en contact au niveau des deux faces frontales de la cassette à film à travers lesquelles s'étend l'axe longitudinal de ladite bobine (5).

23. Cassette à film photographique selon l'une quelconque des revendications 20 à 22, caractérisée en ce que ladite partie étagée ou évidée (91) est en forme de V.

24. Cassette à film photographique selon l'une des revendications 20 à 22, caractérisée en ce que ladite partie étagée ou évidée (81) a une forme arquée.

25. Cassette à film photographique selon l'une des revendications 20 à 22, caractérisée en ce que ladite partie étagée ou évidée (76) est en décrochement.
